Europäisches Patentamt

European Patent Office

Office européen des brevets

(11) Veröffentlichungsnummer: **0 267 354**
**A1**

(12) **EUROPÄISCHE PATENTANMELDUNG**

(21) Anmeldenummer: 87103644.8

(22) Anmeldetag: 13.03.87

(51) Int. Cl.⁴: **G01P 13/02 , G01P 5/12**

(30) Priorität: 04.11.86 DE 3637537

(43) Veröffentlichungstag der Anmeldung:
18.05.88 Patentblatt 88/20

(84) Benannte Vertragsstaaten:
DE FR GB IT SE

(71) Anmelder: **VDO Adolf Schindling AG**
**Gräfstrasse 103**
**D-6000 Frankfurt/Main(DE)**

(72) Erfinder: **Weibler, Wolfgang, Dr.**
**Vor der Heide 14**
**D-6238 Hofheim a. T.(DE)**
Erfinder: **Porth, Wolfgang**
**Röhrborngasse 70**
**D-6000 Frankfurt am Main(DE)**

(74) Vertreter: **Klein, Thomas, Dipl.-Ing. (FH)**
**Sodener Strasse 9 Postfach 6140**
**D-6231 Schwalbach a. Ts.(DE)**

(54) **Vorrichtung zur Bestimmung der Durchflussrichtung.**

(57) Um das Auftreten einer Rückströmung in einem mit bekanntem Massenstrom strömenden rasch pulsierenden Fluidstrom insbesondere im Ansaugkanal (10) eines Verbrennungsmotors zu erkennen, wird eine Vorrichtung zur Bestimmung der Durchflußrichtung mit zwei elektrisch beheizten als Spannungsteiler in einer Brückenschaltung angeordneten temperaturabhängigen Widerstandselementen (12, 14) vorgeschlagen, wobei die beiden Widerstandselemente in voneinander verschiedenen Positionen zu einem oder mehreren die Strömung beeinflussenden Ablenkelementen (26, 28, 30) angeordnet sind.

EP 0 267 354 A1

FIG.4

## Vorrichtung zur Bestimmung der Durchflußrichtung

Die Erfindung betrifft eine Vorrichtung zur Bestimmung der Durchflußrichtung eines mit bekanntem Massenstrom im wesentlichen gerichtet strömenden Fluids mittels zweier elektrisch beheizter als Spannungsteiler in einer Brückenschaltung angeordneter temperaturabhängiger Widerstandselemente.

Die Steuerung der Treibstoffeinspritzung von Verbrennungs-Motoren erfolgt in Abhängigkeit vom Massenstrom der Ansaugluft. Zur Messung des Massenstromes dient in vielen Fällen eine nach dem elektrothermischen Prinzip arbeitende Massenstrom-Meßvorrichtung. Eine derartige Meßvorrichtung weist zur Temperaturkompensation zumindest ein Temperaturmeßelement auf, und die eigentliche Massenstrom-Meßvorrichtung, deren Hauptbestandteil ein elektrisch heizbares im Massenstrom angeordnetes Widerstandselement ist. Die Wärmeableitung von diesem Heizelement ist ein Maß für den Massenstrom, wobei umsomehr Wärme abgeführt wird, je stärker der Massenstrom ist.

Eine derartige Massenstrom-Meßvorrichtung ist bezüglich der Strömungsrichtung sehr unempfindlich, denn unabhängig davon, ob die Strömung vorwärts oder rückwärts gerichtet ist, wird entsprechend der Wärmeableitung praktisch das gleiche elektrische Signal abgegeben. Mit anderen Worten: kann mit einer bekannten Massenstrom-Meßvorrichtung lediglich der Betrag des Massenstromes ermittelt werden, nicht aber dessen Strömungsrichtung. Es hat sich nun gezeigt, daß im Ansaugsystem von Verbrennungsmotoren bei bestimmten Betriebszuständen Schwindgungen der Luftsäule eintreten, welche der konstanten Strömung überlagert sind, so daß daraus eine rasch pulsierende Strömung resultiert. Je nach minütlicher Drehzahl und Zylinderzahl liegt die Grundfrequenz der Schwingung im Bereich zwischen 10 und 1000 Hertz. Je nach Strömungsgeschwindigkeit und Schwingungsamplitude treten während kurzer Zeitintervalle Rückströmungen auf. Aufgrund des oben geschilderten Meßprinzips der Massenstrom-Meßvorrichtung erzeugen Rückströmungen ein gleiches Meßsignal wie Ansaugströmungen, so daß letztlich eine zu hohe Menge an Treibstoff dem Motor zugeführt wird.

Es sind richtungsempfindliche Strömungsmesser bekannt, die zwei auf gemeinsamem Tragkörper angeordnete Widerstands-Elemente aufweisen, die in Strömungsrichtung hintereinander liegend eingebaut werden. Derartige Strömungsmesser eignen sich dem Stand der Technik nach aufgrund ihrer Trägheit jedoch nicht zur Erfassung schneller Änderungen der Strömung.

Aufgabe der vorliegenden Erfindung ist es, eine insbesondere im Ansaugsystem eines Verbrennungsmotors anordenbare rasch ansprechende Vorrichtung zur Bestimmung der Durchflußrichtung eines pulsierenden Luftstromes während des Zeitraumes einer Pulsation zu schaffen. Erfindungsgemäß wird die Aufgabe dadurch gelöst, daß bei einer Vorrichtung nach dem Oberbegriff des Anspruchs 1 die beiden Widerstands-Elemente in voneinander verschiedenen Postionen zu wenigstens einem die Strömung beeinflussenden Ablenkelement angeordnet sind. Dadurch wird erreicht, daß die beiden Widerstandselemente je nach Strömungsrichtung unterschiedlich von der Strömung beeinflußt werden. Somit unterliegen die beiden Widerstandselemente einer unterschiedlichen Wärmeabfuhr und nehmen demzufolge verschiedene Temperaturen ein, so daß sie verschiedene Widerstände aufweisen. Diese Widerstandsänderungen führen zur Verstimmung der Brückenschaltung, so daß die an der Brückendiagonalen abgegriffene Spannung je nach Strömungsrichtung positiv oder negativ ist.

In der einfachsten Ausführungsform ist im Fluidstrom ein Ablenkelement vorgesehen und es ist eines der beiden Widerstandselemente in Strömungsrichtung vor dem ablenkelement und das andere Widerstandselement in Strömungsrichtung hinter dem Ablenkelement angeordnet.

Bei dieser Anordnung wird stets das in Strömungsrichtung vor dem Ablenkelement liegende Widerstandselement stärker angeströmt und somit stärker abgekühlt, als das hinter dem Ablenkelement angeordnete Widerstandselement. Die Anordnung der Widerstandselemente erfolgrt vorzugsweise symmetrisch zum Ablenkelement. Rasches Ansprechen der Widerstands-Elemente wird dadurch erreicht, daß diese selbst eine geringe Massenträgheit aufweisen und daß die Abstände zum Ablenkelement klein sind. Das sichere Ansprechen wird dadurch erleichtert, daß die Vorrichtung im Zentrum der Strömung oder zumindest das Zentrum der Strömung durchsetzend angeordnet ist. Zur Vermeidung von Turbulenzen kann vor, bzw. hinter der Vorrichtung jeweils ein "Strömungsgleichrichter" angeordnet sein, ein mit parallelen Kanälen versehener Körper wie ein Wabenkörper.

Eine gegen Turbulenzen weniger empfindliche Anordnung wird dadurch erreicht, daß zwei voneinander beabstandete Ablenkelemente in Strömungsrichtung hintereinander angeordnet sind und daß die beiden Widerstandselemente hintereinander zwischen den Ablenkelementen jeweils benachbart zu einem der Ablenkelemente angeordnet sind. Bei dieser Anordnung wird das jeweils dem angeströmten Ablenkelement benachbarte Widerstandselement weniger umströmt als das weiter entfernt angeordnete Widerstandselement, da das Ablenkelement strömungstechnisch eine Abschattung bewirkt.

Ein besonders starker Einfluß auf die Widerstandselemente erfolgt durch die Strömung dann, wenn das oder die Ablenk-Elemente als turbulenzerzeugende Hindernisse ausgebilde sind.

In einer eigenerfinderischen Ausgestaltung der Vorrichtung ist vorgesehen, daß die beiden Widerstandselemente zu beiden Seiten eines im spitzen Winkel zur Strömungsrichtung in einem laminaren Fluidstrom angeordneten Ablenkelementes angeordnet sind. Dabei ist das Ablenkelement als - schräge Fläche im Zentrum des Fluidstromes angeordnet, wobei die beiden Widerstandselemente in der Mitte der Fläche symmetrisch auf beiden Seiten angeordnet sind.

In Weiterbildung dieser Ausführung ist seitlich des Ablenk-Elementes beiderseits je ein Führungselement angeordnet, wobei die Widerstandselemente zwischen Ablenkelement und Führungselement angeordnet sind. Die Führungselemente sind im wesentlichen parallel zum Ablenkelement angeordnet, so daß sich zu beiden Seiten des Ablenkelementes Kanäle für die Strömung ergeben. Die Länge der Führungselemente ist jeweils kürzer als die Länge des Ablenkelementes, so daß die Kanten von in Strömungsrichtung gesehen vorderem Führungselement und Ablenkelement in einer zur Strömungs-Richtung senkrecht liegenden Ebene verlaufen und die Kanten vom Abstandselement und in Strömungsrichtung gesehen hinter diesem liegenden Führungselement in einer parallel zur Strömungsrichtung verlaufenden Ebene liegen. Dadurch wird die Strömung bevorzugt in den vor dem Ablenkelement liegenden Kanal gelenkt und der dahinter liegende Kanal abgeschattet. Somit treten im Bereich der beiden in den jeweiligen Kanälen angeordneten Widerstandselemente verschieden starke Strömungen auf, so daß je nach Richtung der Hauptströmung das eine oder das andere Widerstands-Element stärker umströmt ist. Zur Vermeidung von Turbulenzeinflüssen ist die Vorrichtung ggf. beiderseits mit einem "Strömungsgleichrichter" zu versehen. Durch die geometrische form der Strömungskanäle kann die Ansprechzeit der Vorrichtung fluidisch variiert werden, so daß eine Anpassung an eine vom Ort oder der Lage des Einbaues gegebene Parameter leicht möglich ist.

Eine besonders kompakte Ausführung der Vorrichtung wird bei dieser Ausführungsform dann erreicht, wenn das Ablenkelement und die Führungslemente als ein zwei parallele Strömungs-Kanäle aufweisendes gemeinsames mikrotechnisches Bauteil ausgebildet sind. Dabei können die Kanäle beispielsweise durch chemische Materialabtragung hergestellt werden. Durch Methoden wie Aufdampfen, Sputtern, chemische Materialabscheidung und dergleichen, können die Widerstandselemente in besonders eleganter Weise auf die Oberflächen der Strömungskanäle aufgebracht werden.

Metallische Widerstandselemente mit positiven Temperatur-Koeffizienten (PTC) und hoher Stabilität wie Nickel oder Platin sind wegen ihrer Darstellbarkeit als dünne Drähte, Folien oder Filme besonders vorteilhaft. Widerstandselemente mit negativen Temperaturkoeffizienten (NTC) sind vorteilhaft, wenn es besonders auf große Temperatur-Koeffizienten und damit große Sensorsignale ankommt.

Ein rasches Ansprechen der Widerstandselemente ist gewährleistet, wenn diese drahtförmig ausgebildet sind. Dabei werden die Widerstandselemente freistehend in der Strömung angeordnet und über den Querschnitt des Drahtes kann die Massenträgheit und somit die Ansprechzeit des Widerstandselementes beeinflußt werden. Unter "Draht" ist hier jegliche langgestreckte Ausbildung des Widerstandes zu verstehen, wobei der Querschnitt rund, eckig, oder flach sein kann. Insbesondere bei dünnen Drähten, welche ein rasches Ansprechen ermöglichen, ist Rücksicht auf die mechanische Stabilität zu nehmen.

Es hat sich daher auch bewährt, Widerstandselemente folienförmig auszubilden, wobei die Widerstandsschicht auf ein Substrat mit geringer Wärmekapazität und großer Temperaturleitzahl aufgebracht ist.

Derartige Widerstandselemente können insbesondere in mikrotechnische Bauelemente integriert werden.

In weiterer Ausbildung der Erfindung wird vorgeschlagen, die erfindungsgemäße Vorrichtung mit einer an sich bekannten Vorrichtung zur Steuerung der Treibstoffeinspritzung in Abhängigkeit vom Massenstrom der angesaugten Luftmenge zu verbinden, wobei die Treibstoffdosierung zusätzlich in Abhängigkeit von der Polarität der an der Brückendiagonalen der Brückenschaltung anliegenden Spannung erfolgt. Auf diese Weise ist es möglich, die in bestimmten Betriebszuständen eintretende zu hohe Dosierung von Treibstoff zu vermindern, sobald über die erfindungsgemäße Vorrichtung eine Rückströmung im Ansaugsystem des Verbrennungsmotors festgestellt ist.

Ein gleichmäßiges Meßsignal wird dann erhalten, wenn eine Regeleinheit zur Regelung der Speisespannung der Brückenschaltung zur Einstellung der Meßtemperatur der temperaturabhängigen Widerstandselemente vorgesehen ist. Auf diese Weise erfolgt sowohl bei geringem, als auch bei hohem Massestrom die Messung bei gleicher Temperatur der Meßwiderstände. Zur Einstellung der Speisespannung kann beispielsweise ein Signal der Massenfluß-Meßvorrichtung verarbeitet werden. Es ist jedoch auch möglich, die Speisespannung in Abhängigkeit des Widerstandes eines der beiden temperaturabhängigen Widerstndselemente so zu regeln, daß dieser Widerstand stets einen konstanten Wert beibehält. Dadurch ist das Meßsignal alleine abhängig vom Widerstandswert des strömungsbeeinflußten zweiten temperaturabhängigen Widerstandselementes.

Eine besonders vorteilhafte Ausführungsform der erfindungsgemäßen Vorrichtung liegt dann vor wenn die Brückendiagonale mit dem Eingang eines Verstärkers verbunden ist, dessen Ausgang über einen Schmitt-Trigger mit dem Eingang einer Steuereinheit verbunden ist, welche mit einem zweiten Eingang außerdem mit einer Massenstrom-Meßvorrichtung verbunden ist, und ausgangsseitig mit einer Treibstoffdosier-Vorrichtung verbunden ist. Dabei wird das von einer an sich bekannten Massenstrom-Meßvorrichtung an eine ebenfalls bekannte Treibstoff-Dosiervorrichtung abgegebene Meßsignal erfindungsgemäß durch das von der Vorrichtung zur Bestimmung der Durchflußrichtung abgegebene Korrektursignal beeinflußt. Da beide Signale in einem räsch pulsierenden Ansaugluft-strom ständigen Änderungen unterworfen sind, wird das richtungsabhängige Korrektur-Signal über einen Schmitt-Trigger als Schwellwert-Schalter eingespeist, um ein unnötiges Aufschaukeln der Regelkreise bei kleinen Signalpegeln zu unterdrücken.

Es hat sich weiterhin bewährt, das der Pulsation unterliegende Ausgangssignal der Steuereinheit vor dem Eingang in die Treibstoff-Dosiervorrichtung durch einen Integrator zu glätten.

Sofern die Massenstrom-Meßvorrichtung und die Vorrichtung zur Bestimmung der Durchflußrichtung voneinander beabstandet sind und verschiedene Ansprechzeiten aufweisen, kann es vorkommen, daß die Signale beider Vorrichtungen zeitlich verschoben zueinander eintreffen. Es ist dann empfehlenswert, zwischen dem Ausgang des Schmitt-Triggers und dem Eingang der Steuereinheit einen Phasenschieber anzuordnen. Wird in besonderen Fällen eine von der Zeitdauer des Korrektursignals verschiedene Zeitdauer der Beeinflussung des Meßsignals gewünscht, so ist es vorteilhaft, vor dem Eingang der Steuereinheit einen Mono-Flop anzuordnen. Dadurch kann ein kurzer eingehender Impuls dementsprechend verlängert oder auch verkürzt werden.

Das Korrektursignal kann grundsätzlich in verschiedenen Arten auf das Meßsignal einwirken.

Dabei hat es sich bewährt, daß ein Korrektursignal nur dann abgegeben wird, wenn eine Rückströmung stattfindet, das heißt, daß bei Strömung in Ansaugrichtung kein Signal an die Steuereinheit abgegeben wird. Das Korrektursignal kann grundsätzlich auf drei besonders vorteilhafte Arten auf das Meßsignal einwirken:

1. Die Steuereinheit kann das von der Massenfluß-Meßvorrichtung eingehende Meßsignal so lange unterdrücken, wie ein Korrektursignal am zweiten Eingang der Steuereinheit anliegt. Auf diese einfache Art und Weise kann das unnötige und schädliche Überdosieren des Treibstoffes vermieden werden. Es versteht sich von selbst, daß gerade bei einer derartigen Vorrichtung einen das Ausgangssignal glättenden Integrator besondere Bedeutung zukommt.

2. Die Steuereinheit kann den während der Zeitdauer eines am Eingang anliegenden Korektursignales festgestellten Wert des Meßsignals von demjenigen Wert des Meßsignals subtrahieren, der im Zeitraum des ausbleibenden Korrektursignals festgestellt ist. Diese theoretisch korrekte Beeinflussung setzt voraus, daß sowohl der Massenstrom als auch die Strömungsrichtung völlig trägheitslos und unter gleichen Meßbedingungen festgestellt werden. Dies ist in der Praxis nur mit großen Aufwand zu erreichen. So besitzt auch die Massenfluß-Meßvorrichtung einen gewissen integrierenden Charakter, da die bei Rückströmung vom Meßelement erwärmte Luft nach Wechsel zur normalen Strömungs-Richtung das Meßelement nochmals bestreicht und somit weniger abkühlt. Daher hat sich die nachfolgend beschriebene Beeinflussung als wirtschaftlich am sinnvollsten herausgestellt.

3. Die Steuereinheit kann während der Zeitdauer eines am Eingang anliegenden Korrektursignals festgestellten Wert des Meßsignals auf einen vorher bestimmten Bruchteil reduzieren. Durch Vorgabe des Bruchteiles sowie dessen Variation in Abhängigkeit vom Massenstrom und/ oder der Drehzahl des Motors ist eine optimale Anpassung an die verschiedenen Betriebszustände und die technischen Gegebenheiten der Meßvorrichtung möglich.

Weitere Einzelheiten, Vorteile und Merkmale der Erfindung ergeben sich nicht nur aus den Ansprüchen, den diesen zu entnehmenden Merkmalen - für sich und/oder in Kombination - , sondern auch aus der nachstehenden Beschreibung von der in der Zeichnung dargestellten bevorzugten Ausführungsbeispielen.

Es zeigen:

Figur 1 den schematischen Schaltplan einer Brückenschaltung der erfindungsgemäßen Vorrichtung

Figur 2 in schematischer Draufsicht die Anordnung eines Ausführungsbeispiels der erfindungsgemäßen Vorrichtung

Figur 3 in schematischer Draufsicht ein zweites Ausführungsbeispiel der erfindungsgemäßen Vorrichtung

Figur 4 in schematischer Draufsicht eine weitere eigenerfinderische Ausführung der erfindungsgemäßen Vorrichtung

Figur 5 schematisch die Schaltungsanordnung zur Steuerung der Treibstoffdosier-Vorrichtung in Weiterbildung der erfindungsgemäßen Vorrichtung.

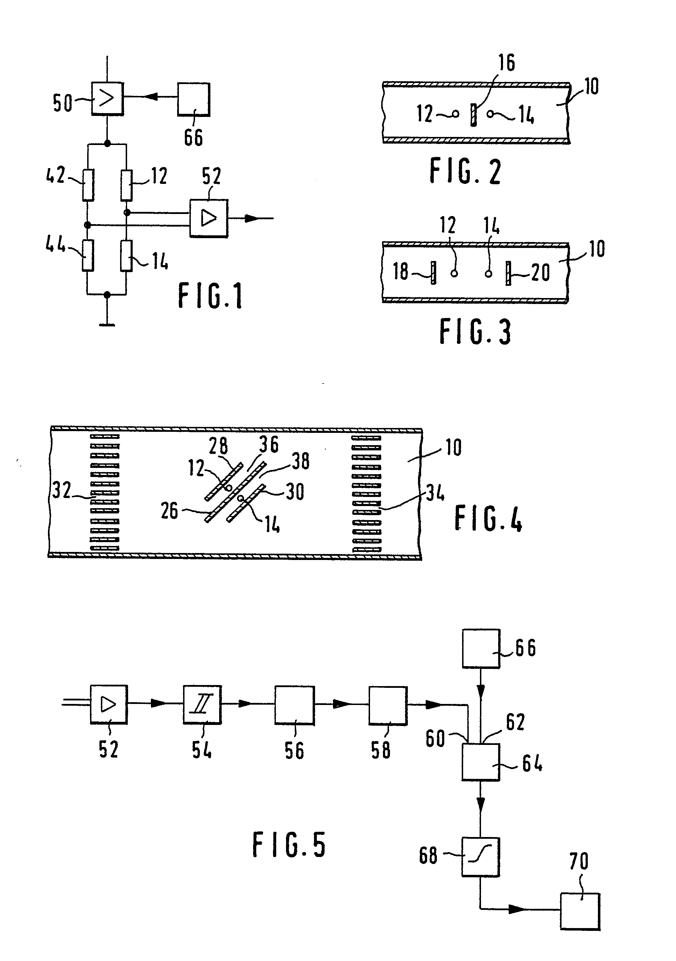

In Figur 1 sind mit den Bezugszeichen (12) und (14) bzw. (42) und (44) die Widerstände einer Brückenschaltung bezeichnet, wobei die Widerstände (12 und 14) sowie (42 und 44) jeweils als Spannungsteiler geschaltet sind. Die Speisung der Brückenschaltung erfolgt über die variable Spannungs-/Stromquelle (50). Die Widerstände (42 und 44) sind Festwiderstände, die Widerstände (12 und 14) sind temperaturabhängige Widerstandselemente, die in von einander verschiedenen Positionen in einem strömenden Fluid angeordnet sind. Infolge unterschiedlicher Position zu einem die Strömung beeinflussenden Ablenkelement werden die elektrisch beheizten temperaturabhängigen Widerstands-Elemente (12 und 14) von der Strömung verschieden stark abgekühlt, so daß sich ihre Widerstände in verschiedenem Maße ändern. Dadurch tritt an den Meßpunkten zwischen den Widerständen (42 und 44) bzw. zwischen den Widerstands-Elementen (12 und 14) eine Spannungsdifferenz in der Brückendiagonalen auf. Aus dieser Spannungsdifferenz wird über einen Verstärker (52) ein Korrektursignal geformt. Die von der Spannungsquelle (50) abgegebene Speisespannung für die Brückenschaltung wird in Abhängigkeit vom Meßsignal einer Massenfluß-Meßvorrichtung (66) gesteuert. Dadurch wird erreicht, daß bei hohem Massenfluß eine stärkere Heizung der Widerstandselemente (12 und 14) erfolgt, als bei geringem Massenfluß, oder mit anderen Worten, es wird eine Überhitzung der Widerstandselemente (12 und 14) bei niedrigem Massenfluß verhindert.

Figur 2 zeigt schematisch in einem Strömungskanal (10) die geometrische Anordnung der Widerstandselemente (12 und 14), zwischen denen mittig ein Ablenkelement (16) angeordnet ist. Die Widerstandselemente (12 und 14) sind - schematisch als Drähte in der Draufsicht gezeichnet, welche das Zentrum des im Strömungskanal (10) strömenden Massenstromes durchsetzen. Als Ablenkelement (16) ist ein sich in Längsrichtung parallel zu den Widerstandsdrähten erstreckender flacher Körper dargestellt. Die Anordnung der Widerstandselemente (12 und 14) ist symmetrisch zum Ablenkelement (16). Erfolgt die Strömung beispielsweise in Fig. 2 von links nach rechts, so wird das Widerstandselement (12) ungehindert von der Strömung erfaßt, während das Widerstandselement (14) im Strömungsschatten des Ablenkelementes (16) liegt. Somit wird in diesem Falle das Widerstandselement (12) stärker abgekühlt als das Widerstandselement (14). Bei umgekehrter Strömungsrichtung, also von rechts nach links, kehren sich die Strömungsverhältnisse an den Widerstandselementen um und damit tritt die umgekehrte Widerstandsänderung .ein.

In Fig. 3 ist wiederum in einem Strömungskanal (10) die Anordnung zweier die Strömungsmitte durchsetzender hintereinander angeordneter Widerstandselemente (12 und 14) dargestellt, wobei jedoch zwei verschiedene Ablenkelemente (18 und 20) vor bzw. hinter den beiden Widerstandselementen angeordnet sind. Die Ablenkelemente (18 und 20) werden hier von langgestreckten parallel zu den Drähten der Widerstandselemente (12 und 14) verlaufenden flachen Körpern dargestellt. In diesem Ausführungsbeispiel ist bei von links erfolgender Strömung das Widerstands-Element (12) stärker vom Ablenkelement (18) abgeschattet als das Widerstandselement (14), so daß das Widerstands-Element (14) stärker abgekühlt wird. Bei Umkehrung der Strömungsrichtung ist das Ablenkelement (20) wirksam, so daß sich die Widerstandsänderung umkehrt.

In Fig. 4 ist eine besonderes elegante Ausführungsform schematisch dargestellt, die sich zur Fertigung in Mikrotechnik hervorragend eignet. Die beiden Widerstands-Elemente (12 und 14) sind wiederum in Draufsicht als Drähte dargestellt, die sowohl in Längsrichtung als auch in Seitenrichtung versetzt zueinander angeordnet sind. Ein flächenförmiges Ablenkelement (26) ist im spitzen Winkel zur Strömung angeordnet, so daß sie die Strömung zum einen Widerstandselement hinleitet und gleichzeitig das zweite Widerstandselement abschattet. Erfolgt die Strömung in diesem Beispiel von links nach rechts, so wird das Widerstandselement (12) stärker angeströmt und somit stärker gekühlt als das Widerstandselement (14). Umgekehrtes gilt bei der Strömungsrichtung von rechts nach links. Die Strömungswirkung auf die Widerstandselemente wird dadurch verstärkt, daß parallel zum Ablenkelement (26) Führungselemente (28 und 30) angeordnet sind, welche sich in Längsrichtung über eine kürzere Entfernung erstrecken, als das Ablenkelement (26). Dadurch werden zu beiden Seiten des Ablenkelementes (26) zwei Strömungskanäle (36 und 38) gebildet, welche die Widerstandselemente (12 und 14) umschließen. Die Eintrittskanten des bevorzugt angeströmten Kanales liegen in einer etwa senkrecht zur Strömungsrichtung angeordneten Ebene, während die Eintrittskanten des jeweils abgeschatteten Kanales in etwa parallel zur Strömungsrichtung angeordnet sind. Dadurch wird die alleine schon vom Ablenkelement (26) hervorgerufene unterschiedliche Beeinflussung der beiden Widerstandselemente noch verstärkt. Zur Vermeidung des Einflusses von Turbulenzen sind beiderseits der Vorrichtung "Strömungsgleichrichter" (32 bzw. 34) angeordnet. Diese Strömungsgleichrichter sind wabenförmige Körper mit zahlreichen parallelen Strömungskanälen. Auf diese Weise ist sichergestellt, daß die eigentliche Meßvorrichtung stets laminar angeströmt ist. Bei mikrotechnischer Ausführung der Vorrichtung können die Widerstandselemente direkt auf den Wänden der Kanäle angeordnet werden. Dadurch wird eine enorme Bruchsicherheit und Unempfindlichkeit gegen Erschütterungen erreicht. Trotzdem ist infolge der miniaturisierten Ausführung eine hohe Ansprechgeschwindigkeit vorhanden.

Fig. 5 zeigt die schematische Weiterleitung des vom Verstärker (52) abgegebenen Korrektursignales. Ein als Schwellwertschalter dienender Schmitt-Trigger siebt einerseits zu niedrige Signale aus und gibt andererseits ein konstantes Signal unabhängig von der Größe des Eingangssignales weiter. Der Ausgang des Schmitt-Triggers (54) ist mit einem Eingang (60) einer Steuereinheit (64) verbunden. An einem weiteren Eingang (62) der Steuereinheit (64) wird das Meßsignal der Massenstrom-Meßvorrichtung (66) empfangen. Der Ausgang der Steuereinheit (64) ist mit einer Treibstoff-Dosiervorrichtung (70) verbunden. Die Pulsation des Massenstromes, welche zu pulsierenden Signalen führen, werden mittels eines Integrators (68) geglättet. Da Massenstrom-Meßvorrichtung (66) und die der Richtungserkennung dienenden Widerstandselemente (12 und 14) an unterschiedlichen Stellen im Ansaugsystem angeordnet sind und verschiedene Ansprechzeiten aufweisen können, ist ein Phasenschieber (56) vorgesehen, welcher für die Synchronisation der Signale sorgt. Zur Korrektur der Impulslänge der Meßsignale ist weiterhin ein Mono-Flop (58) vorgesehen, der es ermöglicht, die Impulsdauer des Korrektursignales verschieden von der Impulslänge des Eingangssignales zu steuern.

Die Steuereinheit (64) hat die Aufgabe, das an die Treibstoff-Dosiervorrichtung abgegebene Signal, welches in der Hauptsache durch die Massenstrom-Meßvorrichtung beeinflußt ist, entsprechend dem Korrektursignal anzupassen. Entsprechend dem nur bei Rückströmung auftretenden Korrektursignal wird von der Steuereinheit, das während dieser Phase der Pulsation eingehende Meßsignal der Massenstrom-Meßvorrichtung entweder unterdrückt, vom Wert des während der übrigen Phase eingehenden Meßsignales abgezogen oder das Meßsignal auf einen zwischen dem Meßwert und Null liegenden Bruchteil reduziert, wobei das Maß des Bruchteils sowohl von der Motordrehzahl als auch von der Höhe des Massenstromes abhängig ist.

## Ansprüche

1. Vorrichtung zur Bestimmung der Durchflußrichtung eines mit bekanntem Massenstrom im wesentlichen gerichtet strömenden Fluids mittels zweier elektrisch beheizter als Spannungsteiler in einer Brückenschaltung angeordneter temperaturabhängiger Widerstandselemente, dadurch gekennzeichnet, daß die beiden Widerstandselemente (12, 14) in voneinander verschiedenen Positionen zu wenigstens einem die Strömung beeinflussenden Ablenkelement (16, 18, 20, 26) angeordnet sind.

2. Vorrichtung nach Anspruch 1, dadurch gekennzeichnet, daß im Fluidstrom ein Ablenkelement (16) vorgesehen ist und daß eines der beiden Widerstandselemente (12 oder 14) in Strömungsrichtung vor dem Ablenkelement (16) und das andere Widerstandselement (14 oder 12) in Strömungsrichtung hinter dem Ablenkelement (16) angeordnet ist.

3. Vorrichtung nach Anspruch 1, dadurch gekennzeichnet, daß zwei voneinander beabstandete Ablenkelemente (18 und 20) in Strömungsrichtung hintereinander angeordnet sind und daß die beiden Widerstandselemente (12 und 14) hintereinander zwischen den Ablenkelementen (18 und 20) jeweils benachbart zu einem der Ablenkelemente (18 bzw. 20) angeordnet sind.

4. Vorrichtung nach Anspruch 2 oder 3, dadurch gekennziechnet, daß die Ablenkelemente (16, 18, 20) als turbulenzerzeugende Hindernisse ausgebildet sind.

5. Vorrichtung nach Anspruch 1, dadurch gekennzeichnet, daß die beiden Widerstandselemente (12, 14) zu beiden Seiten eines im spitzen Winkel zur Strömungsrichtung in einem laminaren Fluidstrom angeordneten Ablenkelementes (26) angeordnet sind.

6. Vorrichtung nach Anspruch 5, dadurch gekennzeichnet, daß beiderseits des Ablenkelementes (26) im wesentlichen zu diesem parallel je ein Führungselement (28 bzw. 30) angeordnet ist, wobei die Widerstandselemente (12 und 14) jeweils zwischen Ablenkelement (26) und Führungselement (28 bzw. 30) angeordnet sind.

7. Vorrichtung nach Anspruch 6, dadurch gekennzeichnet, daß das Ablenkelement (26) und die Führungselemente (28, 30) als ein zwei parallele Strömungskanäle (36, 38) aufweisendes gemeinsames mikrotechnisches Bauteil ausgebildet sind.

8. Vorrichtung nach zumindest einem der vorhergehenden Ansprüche, dadurch gekennzeichnet, daß die Widerstandselemente (12, 14) einen positiven Temperatur-Koeffizienten aufweisen.

9. Vorrichtung nach zumindest einem der vorhergehenden Ansprüche, dadurch gekennzeichnet, daß die Widerstandselemente (12, 14) einen negativen Temperatur-Koeffizienten aufweisen.

10. Vorrichtung nach Anspruch 8 oder 9, dadurch gekennzeichnet, daß die Widerstandselemente (12, 14) drahtförmig ausgebildet sind.

11. Vorrichtung nach Anspruch 8 oder 9, dadurch gekennzeichnet, daß die Widerstnadselemente (12, 14) folienförmig ausgebildet sind.

12. Vorrichtung nach Anspruch 7 und 11, dadurch gekennzeichnet, daß die Widerstandselemente (12, 14) auf den Oberflächen der Strömungskanäle (36, 38) angeordnet sind.

13. Vorrichtung nach Anspruch 1, dadurch gekennzeichnet, daß diese mit einer an sich bekannten Vorrichtung zur Steuerung der Treibstoffeinspritzung für einen Verbrennungsmotor in Abhängigkeit vom Massenstrom der angesaugten Luftmenge verbunden ist, wobei die Treibstoffdosierung zusätzlich in Abhängigkeit von der Polarität der an der Brückendiagonalen der Brücken-Schaltung (12, 14; 42, 44) anliegenden Spannung erfolgt.

14. Vorrichtung nach Anspruch 13, dadurch gekennzeichnet, daß eine Regeleinheit (50) zur Regelung der Speisespannung der Brückenschaltung (12, 14; 42, 44) zur Einstellung der Meßtemperatur der temperaturabhängigen Widerstandselemente (12, 14) vorgesehen ist

15. Vorrichtung nach Anspruch 14, dadurch gekennzeichnet, daß die Brückendiagonale mit dem Eingang eines Verstärkers (52) verbunden ist, dessen Ausgang über einen Schmitt-Trigger (54) mit dem Eingang (60) einer Steuereinheit (64) verbunden ist, welche mit einem zweiten Eingang (62) außerdem mit einer Massenstrom-Meßvorrichtung (66) und ausgangsseitig mit einer Treibstoff-Dosiervorrichtung (70) verbunden ist.

16. Vorrichtung nach Anspruch 15, dadurch gekennzeichnet, daß zwischen dem Ausgang der Steuereinheit (64) und dem Eingang der Treibstoff-Dosiervorrichtung (66) ein Integrator (68) angeordnet ist.

17. Vorrichtung nach Anspruch 16, dadurch gekennzeichnet, daß zwischen dem Ausgang des Schmitt-Triggers (54) und dem Eingang (60) der Steuereinheit (64) ein Phasenschieber (56) und/oder ein Monoflop (58) angeordnet ist.

18. Vorrichtung nach Anspruch 15, dadurch gekennzeichnet, daß die Steuereinheit (64) das von der Massenfluß-Vorrichtung (66) nach Anspruch 15 eingehende Meßsignal solange unterdrückt, wie ein Korrektursignal am Eingang (60) anliegt.

19. Vorrichtung nach Anspruch 15, dadurch gekennzeichnet, daß die Steuereinheit (64) den während der Zeitdauer eines am Eingang (60) anliegenden Korrektursignales festgestellten Wert des Meßsignals von demjenigen Wert des Meßsignals subtrahiert, der im Zeitraum ausbleibenden Korrektursignals festgestellt ist.

20. Vorrichtung nach Anspruch 15, dadurch gekennzeichnet, daß die Steuereinheit (64) den während der Zeitdauer eines am Eingang (60) anliegenden Korrektursignales festgestellten Wert des Meßsignals au einen vorher bestimmten Bruchteil reduziert.

FIG.1

FIG.2

FIG.3

FIG.4

FIG.5

Europäisches
Patentamt

# EUROPÄISCHER RECHERCHENBERICHT

Nummer der Anmeldung

EP 87 10 3644

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-2 653 359 (J. AGAR INSTRUMENTATION LTD) <br> * Seite 7, Zeilen 29-32; Seite 13, Zeile 11 - Seite 14, Zeile 30; Figuren 1-5 * | 1-4 | G 01 P 13/02 <br> G 01 P 5/12 |
| X | DE-A-2 317 431 (SIEMENS AG) <br> * Seite 2, Zeilen 9-30; Figuren 1-4 * | 1,2,4,5 | |
| X | EP-A-0 024 327 (RICO) <br> * Seite 3; Figuren 1-3 * | 1,2,4, 10 | |
| A | US-A-4 024 761 (DJORUP) <br> * Spalte 3, Zeile 13 - Spalte 4, Zeile 67; Spalte 6, Zeilen 44-47; Figuren 2,6,8 * | 1-3,6-9 ,11,12 | |
| A | GB-A-1 488 012 (HAWKER SIDDELEY DYNAMICS ENGINEERING LTD) <br> * Seite 2, Zeilen 71-95; Seite 3, Zeilen 2-9; Figuren 2,3 * | 1,2,8,9 ,15 | |

RECHERCHIERTE SACHGEBIETE (Int. Cl.4)

G 01 P
G 01 F

Der vorliegende Recherchenbericht wurde für alle Patentansprüche erstellt

| Recherchenort | Abschlußdatum der Recherche | Prüfer |
|---|---|---|
| DEN HAAG | 05-02-1988 | HANSEN P. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)